# EUROPEAN PATENT APPLICATION

(11) **EP 1 359 404 A1**
(43) Date of publication of application: **05.11.2003**
(21) Application number: 02751700.2
(22) Date of filing: 25.07.2002
(51) Int. Cl.: G01N 1/36

(54) **SOLUTION DENSITY MEASURING METHOD, SAMPLE CELL USED FOR THE METHOD, AND SOLUTION DENSITY MEASURING DEVICE**

(30) Priority: 26.07.2001 JP 2001226406
(71) Applicant: MATSUSHITA ELECTRIC INDUSTRIAL CO., LTD., Kadoma-shi, Osaka 571-8501 (JP)
(72) Inventor: KAWAMURA, Tatsurou, Kyotanabe-shi, Kyoto 610-0351 (JP); KAMEI, Akihito, Yawata-shi, Kyoto 614-8295 (JP); YUGAWA, Keiko, Nara-shi, Nara 631-0041 (JP)
(74) Representative: Leson, Thomas Johannes Alois, Dipl.-Ing.
(86) International application number: JP0207573
(87) International publication number: WO03010513

(57) **Abstract**

Measurement of the concentration of a specific component in a test liquid is made more efficient by obtaining a mixed liquid of the test liquid and a reagent liquid without having to perform a stirring operation. A mixed liquid comprising the test liquid and the reagent liquid is obtained by injecting the reagent liquid into the test liquid with stirring caused by the injection; and with the test liquid being irradiated with light, at least a first optical characteristic of the test liquid before the injection of the reagent liquid and a second optical characteristic of the test liquid after the injection of the reagent liquid are measured to measure the concentration of the specific component in the test liquid from the first optical characteristic and the second optical characteristic.

## Description

### Technical Field

The present invention relates to a solution stirring method. The present invention also relates to a solution stirring method for use in mixing a test liquid with a reagent liquid to measure the concentration of a specific component in the test liquid. The present invention further relates to a sample cell for use in these methods.

Particularly, the sample cell in accordance with the present invention exhibits high practicality based on its features including simplicity, high reliability, small size and low price in measuring optical characteristics of the test liquid.

### Background Art

In measuring optical characteristics of a test liquid to calculate a concentration, the test liquid is retained in a sample cell having a structure allowing propagation of light in the test liquid. The sample cell is made of glass or the like, shaped rectangular parallelepiped, and has a light-transmitting side that is transparent. For this reason light can propagate in the test sample.

Usually, such a sample cell has open top from which a predetermined amount of a test liquid is introduced into the sample cell by means of a dropping pipette, pipetter, syringe or the like. Subsequently, a predetermined amount of a reagent liquid is injected into the sample cell, and the test liquid and the reagent liquid are homogeneously mixed together by stirring the resulting mixed liquid with a stirring rod or by vibrating the sample cell. Then, optical characteristics of the mixed liquid are measured to determine the concentration of a specific component in the test liquid.

However, there has been a problem that stirring with a stirring rod or vibrating a sample cell itself as does the above-described conventional method makes the operation troublesome and complicate. Further, there have been other problems including, for example, impediment to observation by such a stirring rod, or a prolonged time period needed from the mixing of the liquids to the starting of observation because of the necessity of removing the sample cell from the optical system.

Thus, in observing a transitional phenomenon immediately after the mixing of the test liquid and the reagent liquid, a blank time for which the observation cannot be made is increased undesirably. This problem becomes more serious particularly where the rate of the reaction between the test liquid and the reagent liquid is high. Further, the removal of the sample cell from the optical system for measurement causes a change in the position of the optical system and like changes to take place, which lowers the precision in measuring changes in optical characteristics of the test liquid before and after the mixing with the reagent liquid.

In contrast to the aforementioned problems, the present invention makes it easy to mix the test liquid and the reagent liquid homogeneously without using a stirring rod and without removing the sample cell. Thus, the present invention is advantageous in observing a transitional phenomenon that occurs from a point of time immediately after the mixing of the test liquid and the reagent liquid.

Thus, the present invention has very high practical effects and allows measurement and examination to be achieved more efficiently at a higher speed and with a higher precision and reduced labor.

### Disclosure of Invention

The present invention is directed to a solution concentration measuring method for measuring concentration of a specific component in a test liquid by measuring optical characteristics of a mixed liquid obtained by mixing a test liquid and a reagent liquid, the method being characterized by comprising the steps of:
(a) injecting a reagent liquid into a test liquid with stirring caused by the injection to obtain a mixed liquid comprising the test liquid and the reagent liquid; and
(b) measuring at least a first optical characteristic of the test liquid before the injection of the reagent liquid and a second optical characteristic of the test liquid after the injection of the reagent liquid while irradiating the test liquid with light, to measure the concentration of the specific component in the test liquid on the basis of the first optical characteristic and the second optical characteristic.

At the step (2), preferably, the first optical characteristic and the second optical characteristic are measured continuously.

Preferably, a volume V₀ of the test liquid, a volume V of the reagent liquid and a time period T during which the reagent liquid is injected are set to have a predetermined relation.

The aforementioned relation preferably satisfies the formula (1):

T≦K×(V/V₀) (1)

wherein K is a constant. Preferably, the aforementioned K is not greater than 10.

Further, the present invention is directed to a sample cell characterized by comprising:
a liquid retaining portion capable of retaining a liquid and of measuring optical characteristics of the liquid while irradiating the liquid with light; and
an injection port for injecting a second liquid into a first liquid previously retained in the liquid retaining portion with stirring caused by the injection of the second liquid into the first liquid to obtain a mixed liquid comprising the first liquid and the second liquid.

Preferably, the injection port is positioned lower than a liquid level of the previously retained first liquid such that the second liquid is injected into the first liquid without the second liquid contacting outside air.

Preferably, a direction of the injection of the second liquid from the injection port and an optical axis of the light intersect each other in the liquid retaining portion.

Preferably, the sample cell is capable of injecting the second liquid so as to cause the first liquid to generate a single whirlpool.

Preferably, a direction of the injection of the second liquid from the injection port is perpendicular to one inner wall surface of the liquid retaining portion.

It is preferred that: the liquid retaining portion has a rectangular parallelepiped shape; the injection port is positioned at one side of the liquid retaining portion; and one end of the injection port is in contact with a side perpendicular to the former one side. Stated otherwise, it is preferred that the injection port is disposed at one side of the liquid retaining portion and one end of the injection port is in contact with another side perpendicular to the former side.

It is preferred that: the liquid retaining portion has a bottomed cylindrical shape; and a direction of the injection of the second liquid from the injection port is parallel with an inner wall of the liquid retaining portion at a point where the injection port is in contact with the inner wall.

Preferably, a direction of the injection of the second liquid from the injection port is parallel with a liquid level of the previously retained first liquid.

Preferably, an internal circumferential distance D of the liquid retaining portion, an open area S of the injection port and a volume V of the second liquid satisfy a predetermined relation.

Preferably, the aforementioned relation satisfies the formula (2):

M×D≦V/S≦N×D (2)

wherein M and N are each independently a constant. Preferably, the aforementioned M is 1.7 and the aforementioned N is 5.

Further, the present invention is directed to a solution concentration measuring apparatus characterized by comprising a sample cell, the sample cell comprising:
a liquid retaining portion capable of retaining a liquid and of measuring optical characteristics of the liquid while irradiating the liquid with light; and
an injection port for injecting a second liquid into a first liquid previously retained in the liquid retaining portion with stirring caused by the injection of the second liquid into the first liquid to obtain a mixed liquid comprising the first liquid and the second liquid.

### Brief Description of Drawings

Fig. 1 is a schematic top plan view of a solution concentration measuring apparatus including a sample cell in accordance with the present invention.
Fig. 2 is a schematic vertical sectional view of the solution concentration measuring apparatus including the sample cell in accordance with the present invention.
Fig. 3 is a graph showing the relation between the elapsed time from the starting of measurement and the intensity of transmitted light in the case where 0.1 ml, 0.07 ml, 0.05 ml or 0.03 ml of pure water was injected in 2 seconds in Example 1.
Fig. 4 is a graph showing the relation between the elapsed time from the starting of measurement and the intensity of transmitted light in the case where 0.05 ml of pure water was injected in one second in Example 2.
Fig. 5 is a graph showing the relation between the elapsed time from the starting of measurement and the intensity of transmitted light in the case where 0.05 ml of pure water was injected in 2.8 seconds in Example 2.
Fig. 6 is a graph showing the relation between the elapsed time from the starting of measurement and the intensity of transmitted light in the case where 0.07 ml of pure water was injected in 2.8 seconds in Example 2.
Fig. 7 is a graph showing the relation between the elapsed time from the starting of measurement and the intensity of transmitted light in the case where 0.07 ml of pure water was injected in 4 seconds in Example 2.
Fig. 8 is a graph showing the relation between the elapsed time from the starting of measurement and the intensity of transmitted light in the case where 0.1 ml of pure water was injected in 2.8 seconds in Example 2.
Fig. 9 is a graph showing the relation between the elapsed time from the starting of measurement and the intensity of transmitted light in the case where 0.1 ml of pure water was injected in 4 seconds in Example 2.
Fig. 10 is a graph showing the relation between the elapsed time from the starting of measurement and the intensity of transmitted light in the case where 0.1 ml of pure water was injected in 5 seconds in Example 2.
Fig. 11 is a graph showing the relation between the ratio (V/V₀) of a test liquid to a reagent liquid and the time period (T) during which the reagent liquid was injected in Examples 1 and 2.
Fig. 12 is a schematic top plan view of a solution concentration measuring apparatus including another sample cell in accordance with the present invention.
Fig. 13 is a schematic vertical sectional view of the solution concentration measuring apparatus including the sample cell shown in Fig. 12 in accordance with the present invention.
Fig. 14 is a graph showing the relation between the elapsed time from the starting of measurement and the intensity of transmitted light in the case where 0.05 ml of a sulfosalicylic acid reagent liquid was injected in 2 seconds (solid line) or 5 seconds (dotted line) in Example 8.
Fig. 15 is a graph showing the relation between the protein concentration of a test liquid and the output signal generated after lapse of 360 seconds from the mixing with a reagent liquid in Example 8.

### Best Mode for Carrying Out the Invention

The present invention is directed to a solution concentration measuring method characterized by comprising the steps of: (a) injecting a reagent liquid into a test liquid with stirring caused by the injection to obtain a mixed liquid comprising the test liquid and the reagent liquid; and (b) measuring at least a first optical characteristic of the test liquid before the injection of the reagent liquid and a second optical characteristic of the test liquid after the injection of the reagent liquid while irradiating the test liquid with light, to measure the concentration of a specific component in the test liquid on the basis of the first optical characteristic and the second optical characteristic.

Test liquids for use in the present invention include body fluids such as urine and blood, and various dispersions and solutions.

Examples of test substance (specific components) contained in the test liquid include albumin, hemoglobin, various hormones, and the like.

Accordingly, any appropriate reagent liquid can be selected depending on the kind of test liquid and the kind of test substance, and examples of such reagent liquid include sulfosalicylic acid, and antibodies that are specifically bonded to respective test substances.

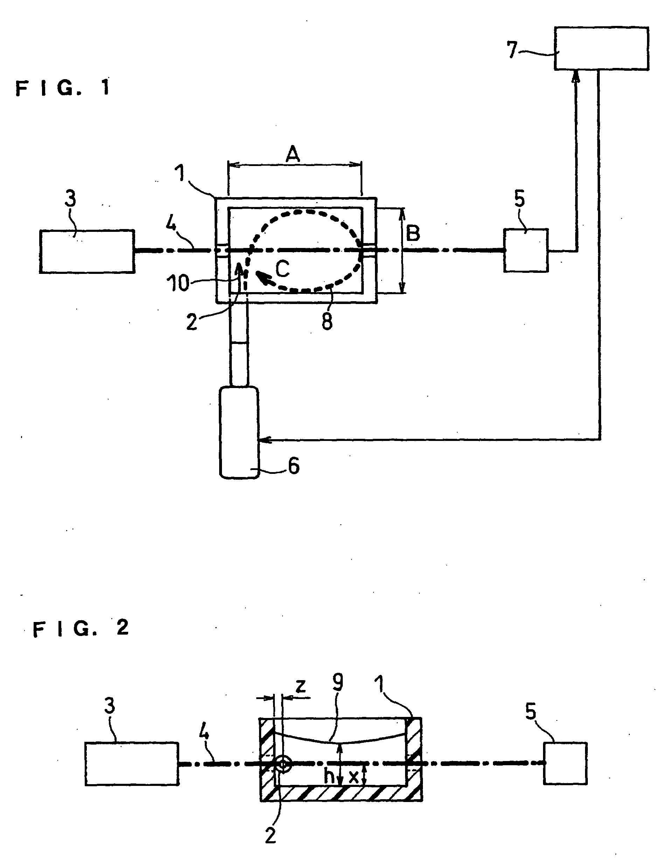

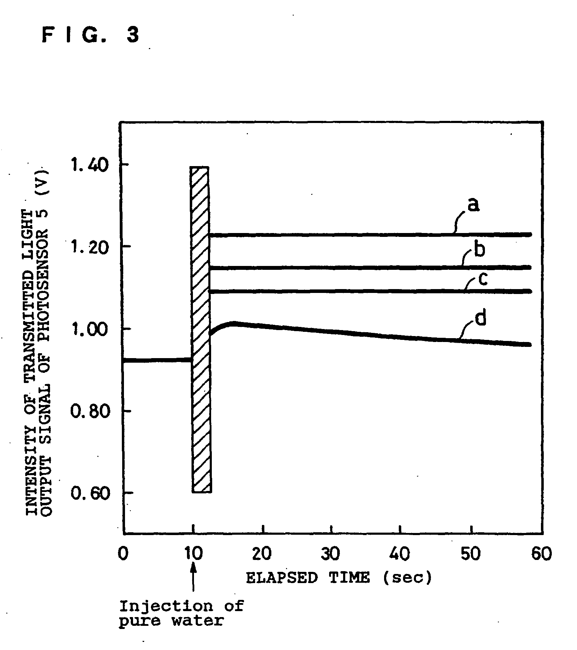

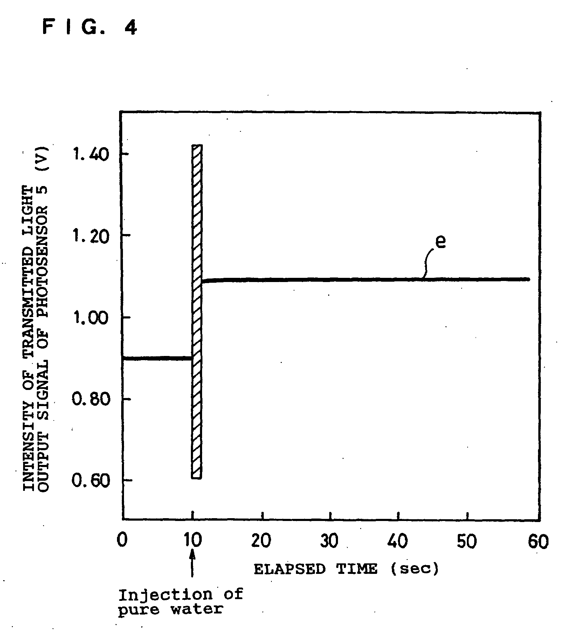

An embodiment of the present invention will be described below with reference to Figs. 1 and 2. Fig. 1 is a schematic top plan view of a solution concentration measuring apparatus including a sample cell in accordance with the present invention. Fig. 2 is a schematic vertical sectional view of the solution concentration measuring apparatus shown in Fig. 1.

In Figs. 1 and 2, sample cell 1 comprises a rectangular parallelepiped aluminum container having an opening oriented upward. Two opposite sides of the container are fitted with glass plates respectively serving as optical windows corresponding to opposite ends of an optical path through which a substantially parallel light 4 passes. With this arrangement, the substantially parallel light 4 is permitted to pass through a test liquid retained in a liquid retaining portion of the sample cell 1.

Here, the distance over which light propagates in the solution retaining portion of the sample cell 1, that is, the distance between the optical windows is indicated by A, while the distance between the sides of the sample cell extending in a direction perpendicular to the light propagation direction is indicated by B. In the present embodiment, A is 0.8 cm and B is 0.4 cm. An injection port 2 is located at an end portion of a window-free side as shown in Fig. 1 and has an inside diameter (diameter) of 0.1 cm. The center of the vertical section of the injection port 2 is spaced a distance x from the bottom of the sample cell 1 and a distance z from an optical window. The direction of injection is parallel with the surface of the optical window surface and perpendicular to the optical axis of substantially parallel light 4 to be described later. With this arrangement the injection axis extending in the direction of injection from the center of the section of the injection port 2 and the optical axis of substantially parallel light 4 have a point of intersection in the liquid retaining portion of the sample cell 1. In the present embodiment, x is 0.4 cm and z is 0.1 cm.

A light source 3 is a semiconductor laser module emitting substantially parallel light 4 having a wavelength of 780 nm, an intensity of 3.0 mW and a beam diameter of 0.2 cm. The optical axis of substantially parallel light 4 is parallel with the bottom of the liquid retaining portion of the sample cell 1 and is spaced a distance of 0.4 cm height from the bottom. Accordingly, the optical axis and the injection portion 2 are located at an equal height from the bottom.

Light having passed through the test liquid is detected by a photosensor 5. A pump 6 injects the reagent liquid into the test liquid retained in the sample cell 1 from the injection port 2. A computer 7 analyzes the output signal of the photosensor 5 and controls the pump 6. The arrow indicated by reference numeral 8 schematically illustrates a whirlpool generated when the reagent liquid is injected from the injection port 2.

In the liquid retaining portion of the sample cell 1 the lowest portion of liquid level 9 of the test liquid lies at a height h from the bottom of the liquid retaining portion. Since the sample cell 1 has rounded inner wall corners, that is, since the corner portions thereof are not right-angled in the strict sense, the sample cell 1 retains the test liquid in an amount of about 0.25 ml when h is 0.8 cm. An arrow 10 indicates the direction of injection of the liquid injected from the injection port 2. In the present invention, the plane at the lowest portion of the liquid level 9 is defined as the liquid level. In accordance with this definition, the direction of injection is parallel with the liquid level in the present embodiment.

The present embodiment first uses a dispersion containing polystyrene particles having an average diameter of 20 nm homogeneously dispersed in pure water as the test liquid to be retained in the sample cell 1. The whole of this test liquid is uniformly turbid. Examples where pure water as the reagent liquid was injected into such a test liquid will be described. Since the dispersion containing polystyrene particles sufficiently and homogeneously dispersed in pure water has a specific gravity approximating to that of pure water and since the particle diameter of the polystyrene particles is small enough, phenomena including separation and precipitation are not observed within each time period for experiment adopted in the present invention. This, however, does not hold true for the cases where homogeneous dispersion was not attained due to insufficient stirring. When pure water is injected into the test liquid, the polystyrene particles are diffused throughout the liquid and, hence, the polystyrene particle concentration is lowered, resulting a reduction in the degree of turbidness, i.e. turbidity of the whole test liquid. The turbidity of the test liquid is measured in terms of the intensity of transmitted light represented by the output signal of the photosensor 5.

A change in the turbidity of the dispersion thus brought about due to diffusion of the fine particles contained in the dispersion does not involve any chemical reaction. Accordingly, the turbidity of the whole test liquid depends on the degree of diffusion only of the polystyrene particles and, hence, there is no need to take any reaction rate into consideration. Therefore, the fact that the turbidity has been stabilized at a certain value means that the fine particles have been sufficiently spread over the entirety of the dispersion and homogeneously dispersed therein. From these facts, it is convenient to mix a dispersion containing fine particles serving as the reagent liquid with the test liquid and measure the turbidity of the mixed liquid in verifying a stirring effect.

The "stirring", as used herein, means that the dispersed condition of a whole liquid is made substantially homogeneous. That is, the "stirring" means that any portions of the liquid are made to have substantially equal concentrations of a specific component (fine particles for example) in the liquid.

### Example 1

First, 0.25 ml of a test liquid containing polystyrene particles as described above was introduced into the sample cell 1. Then, the computer 7 started recording the output signal of the photosensor 5, while the sample cell 1 being irradiated with substantially parallel light 4. A change with time in the output signal of the photosensor 5 in this case is shown in Fig. 3. In Fig. 3, the abscissa represents the elapsed time from the starting of recording the output signal, and the ordinate represents the output signal of the photosensor 5. At a point of time after lapse of 10 seconds from the starting of recording, the computer 7 controlled the pump 6 to inject pure water as the reagent liquid from the injection port 2 in two seconds.

The solid lines in Fig. 3 show respective changes in the output signal of the photosensor 5 that occurred in the case of injection of pure water as described above. In Fig. 3, a, b, c and d represent the respective changes resulted from injection of 0.1 ml pure water, injection of 0.07 ml pure water, injection of 0.05 ml pure water and injection of 0.03 ml pure water, respectively. During the period of time of two or more seconds from the starting of pure water injection at an elapsed time of 10 seconds, the intensity and the propagating direction of transmitted light were disturbed by the flux (flow) of the injected pure water directly penetrating the optical path of substantially parallel light 4 and, hence, the output signal of the photosensor 5 varied remarkably. The hatched region in Fig. 3 represents the amplitude of this variation.

Specifically, the intensity of transmitted light varied between 0.6 V and 1.4 V. When the same operation was performed using pure water of the equal volume, the amplitude of variation was still represented by that region, though the details of the variation were not reproduced. Since the concentration of polystyrene particles lowered depending on the amount of injected pure water, the turbidity also lowered depending on the amount of injected pure water.

Where the injected amounts were 0.1 ml, 0.07 ml and 0.05 ml, respectively, the resulting output signals corresponded to the respective injected amounts and the resulting output signals themselves became stabilized as shown by the solid lines a, b and c in Fig. 3. This was because injection of pure water generated a whirlpool, which enabled the mixed liquid of the test liquid and pure water to be stirred until the mixed liquid became sufficiently homogeneous.

On the other hand, where the injected amount was 0.03 ml, the resulting output signal was not stabilized as shown by the solid line d in Fig. 3. This was because stirring was not sufficient to make the dispersed condition of the mixed liquid homogeneous.

Since the volume of the polystyrene dispersion before the injection of pure water was 0.25 ml, the injection of pure water in an amount at least 1/5 as large as that volume, namely in an amount of 0.05 ml or more enabled the mixed liquid to be stirred until the mixed liquid became sufficiently homogeneous. In measuring the concentration of a specific component in the test liquid from the turbidity, it was possible to calculate the concentration of the test liquid by means of the computer 7 by analyzing each of the output signals of the photosensor 5 generated after the injection, which are represented by the respective solid lines.

As described above, the present embodiment is capable of stirring a mixed liquid comprising a test liquid and a reagent liquid without using a stirring rod and without removing the sample cell from the optical system. Thus, the present embodiment is capable of continuously measuring the turbidities of the test liquid before and after the mixing with another liquid and hence is effective particularly where a transitional turbidity change involving a reaction is to be observed and where a difference in the turbidity of the test liquid before the mixing with another liquid is to be compensated for. Further, since the present embodiment is capable of simplifying the procedure as well as of reducing the possibility of occurrence of a malfunction, the present invention has very high practical effects and allows measurement and examination to be achieved more efficiently with reduced labor.

### Example 2

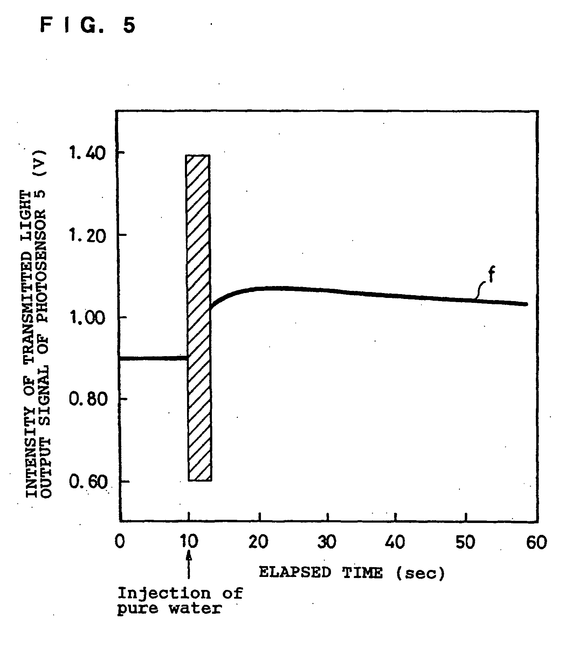

0.25 ml of a test liquid containing polystyrene particles as used in Example 1 was introduced into the sample cell 1. Then, the computer 7 was operated to start recording the output signal of the photosensor 5, while the sample cell 1 being irradiated with substantially parallel light 4. Solid lines e and f in Figs. 4 and 5 show respective changes with time in the output signal of the photosensor 5. In each of Figs. 4 and 5, the abscissa represents the elapsed time from the starting of recording the output signal, and the ordinate represents the output signal of the photosensor 5. At a point of time after lapse of 10 seconds from the starting of recording, the computer 7 controlled the pump 6 so that 0.05 ml of pure water was injected from the injection port 2. Here, the solid line e in Fig. 4 represents the case where pure water was injected in one second, and the solid line f in Fig. 5 represents the case where pure water was injected in 2.8 seconds.

In Fig. 4, during a period of time of one second from the starting of pure water injection at the elapsed time of 10 seconds, the intensity and the propagating direction of transmitted light were disturbed due to a flow of the injected pure water directly penetrating the optical path of substantially parallel light 4 and, hence, the output signal of the photosensor 5 varied remarkably. The hatched region in Fig. 4 represents the amplitude of this variation. Specifically, the intensity of transmitted light varied between 0.6 V and 1.42 V. When the aforementioned operation was performed under the same condition, the amplitude of variation was still represented by that region, though the details of the variation were not reproduced.

In Fig. 5, during a period of time of 2.8 seconds from the starting of pure water injection at an elapsed time of 10 seconds, the intensity and the propagating direction of transmitted light were disturbed due to a flow of the injected pure water directly penetrating the optical path of substantially parallel light 4 and, hence, the output signal of the photosensor 5 varied remarkably. The hatched region in Fig. 5 represents the amplitude of this variation. Specifically, the intensity of transmitted light varied between 0.6 V and 1.4 V. When the aforementioned operation was performed under the same condition, the amplitude of variation was still represented by that region, though the details of the variation were not reproduced.

In this Example, 0.5 ml of pure water was injected. This was the same as in the case c of Example 1 shown in Fig. 3. In the case e shown in Fig. 4 where pure water was injected in one second, the output signal of the photosensor 5 reached about 1.09 V and became stabilized, as in the case c shown in Fig. 3. On the other hand, in the case f shown in Fig. 5 where pure water was injected in 2.8 seconds, the output signal of the photosensor 5 did not become stabilized, unlike the case c shown in Fig. 3. This was because stirring was insufficient to make the mixed liquid homogeneous.

As can be understood from the results including the results obtained in Example 1, since the volume of the polystyrene dispersion before the injection of pure water was 0.25 ml, the injection of pure water in an amount at least 1/5 as large as that volume, namely in an amount of 0.05 ml or more in at least two seconds enabled the mixed liquid to be stirred until the mixed liquid became sufficiently homogeneous.

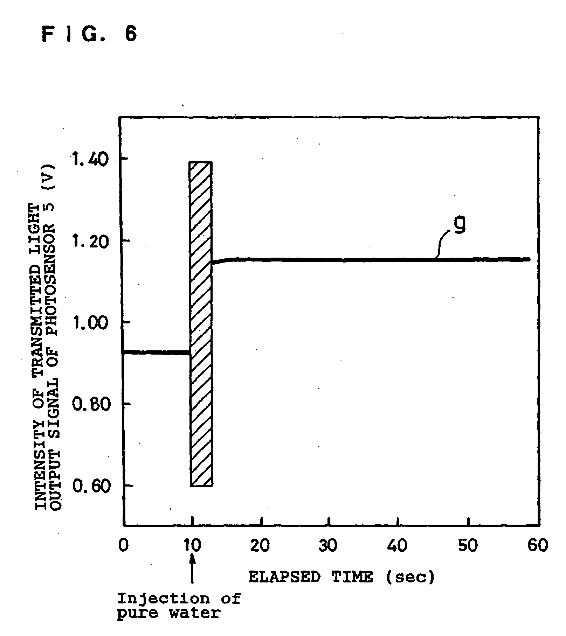

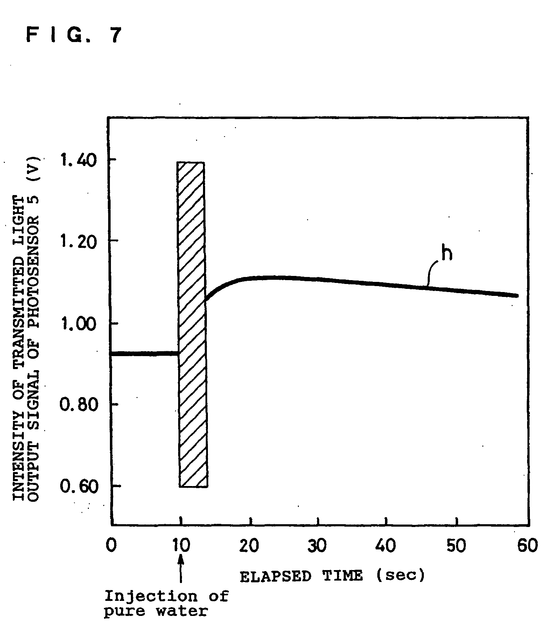

The solid lines g and h in Figs. 6 and 7 show respective changes with time in the output signal of the photosensor 5 under the condition where the amount of pure water to be injected was 0.07 ml. The solid line g in Fig. 6 represents the case where pure water was injected in 2.8 seconds, and the solid line h in Fig. 7 represents the case where pure water was injected in 4 seconds. As in Figs. 3, 4 and 5, the hatched region in each of Figs. 6 and 7 indicates that the output signal of the photosensor 5 varied remarkably and the amplitude of the variation was within that region. Also, the details of the variation were not reproduced. In the case g shown in Fig. 6, the output signal of the photosensor 5 reached about 1.15 V and became stabilized, as in the case b of Example 1 shown in Fig. 3.

On the other hand, in the case h shown in Fig. 7 where pure water was injected in 4 seconds, the output signal of the photosensor 5 did not become stabilized, unlike the aforementioned cases b and g. This was because stirring was insufficient to make the mixed liquid homogeneous.

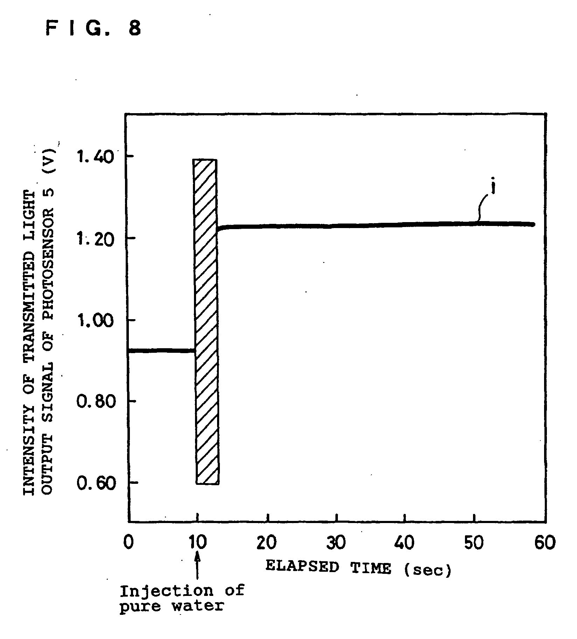

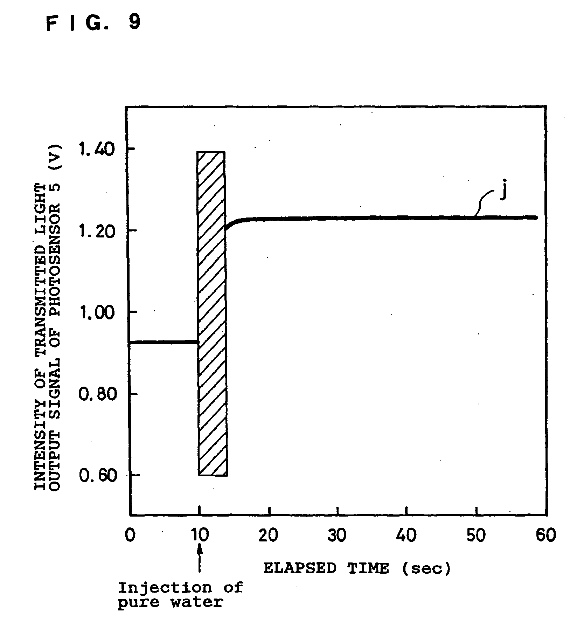

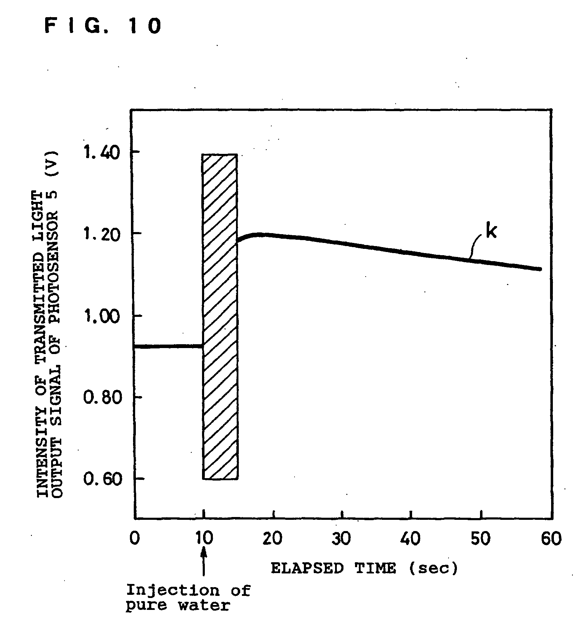

The solid lines i, j and k shown in Figs. 8, 9 and 10 show respective changes with time in the output signal of the photosensor 5 under the condition where the amount of pure water to be injected was 0.1 ml. The solid line i in Fig. 8 represents the case where pure water was injected in 2.8 seconds; the solid line j in Fig. 9 represents the case where pure water was injected in 4 seconds; and the solid line k in Fig. 10 represents the case where pure water was injected in 5 seconds. As in Figs. 3 to 7, the hatched region in each of Figs. 8, 9 and 10 indicates that the output signal of the photosensor 5 varied remarkably. Though the amplitude of the variation was within that region, the details of the variation were not reproduced.

In each of the cases i and j shown in respective Figs. 8 and 9, the output signal of the photosensor 5 reached about 1.22 V and became stabilized, as in the case a of Example 1 shown in Fig. 3. On the other hand, in the case k shown in Fig. 10 where pure water was injected in 5 seconds, the output signal of the photosensor 5 did not become stabilized, unlike the aforementioned cases a, i and j. This was because stirring was insufficient to make the mixed liquid homogeneous.

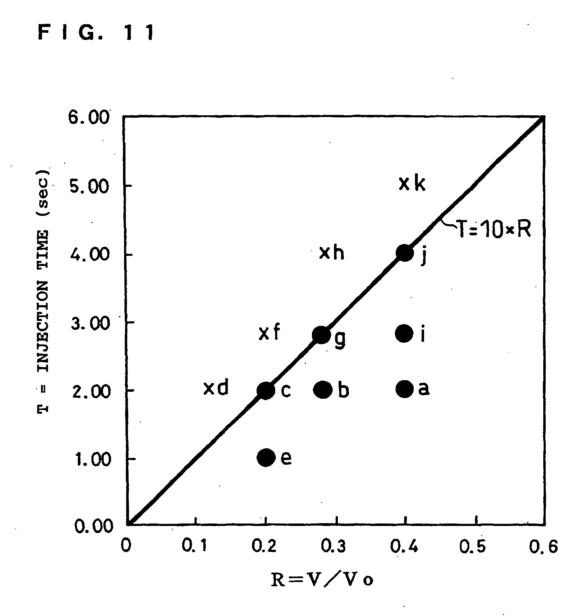

Fig. 11 shows the stirring characteristic under each of the conditions represented by a to k of this Example and Example 1. In Fig. 11, the abscissa represents the ratio R (=V/V₀) of the volume V of pure water to be injected to the volume V₀ of a test liquid before the injection of pure water, and the ordinate represents a time period T (sec) during which pure water was injected.

In Fig. 11, the symbol "●" represents the case where sufficient stirring could be achieved to make the mixed liquid homogeneous enough, and the symbol "×" represents the case where sufficient stirring could not be achieved to make the mixed liquid homogeneous enough. The characters a to k on the right-hand sides of the symbols "●" and "×" correspond to the solid lines a to k, respectively, shown in Figs. 3 to 10. The solid line in Fig. 11 is a straight line representing T=10 ×R.

As seen from Fig. 11, sufficient stirring could be achieved to make the resulting mixed liquid homogeneous enough when at least the following formula (1) was satisfied. In the formula (1), K is 10 (sec) or less.

T≦K×R (1)

Also, it could be confirmed from Fig. 11 and the formula (1) that when the volume ratio R of the liquid to be injected was constant, sufficient stirring could be achieved to make the resulting mixed liquid homogeneous enough on condition that the injection time T was not more than a predetermined value. At the same time, it could be confirmed that when the injection time T was constant, sufficient stirring could be achieved to make the resultant mixed liquid homogeneous enough on condition that R was not less than a predetermined value. These resulted because the injection of the liquid gave kinetic energy to the liquid in the sample cell, thereby causing the mixed liquid to be rotated and stirred.

That is, as the injection rate of the liquid injected (the volume of the liquid injected per unit time) and the volume of the liquid injected increase, the kinetic energy of the liquid increases and also the kinetic energy obtained by rotation of the liquid within the sample cell increases, thus resulting in an improved stirring effect. Since the injected volume and the injection time largely influence the stirring effect as such, a sufficient stirring effect can be brought about by setting R=V/V₀ and the injection time T to have a predetermined relation therebetween. Particularly from the above-described characteristic, it is considered reasonable if the relation represented by the formula (1) is satisfied. Further, it could be confirmed from the above-described results of the experiments that sufficient stirring could be achieved as long as K was not more than 10 seconds.

As described above, in accordance with this Example, a solution can be stirred without using a stirring rod and without removing the sample cell from the optical system. Thus, the turbidities of a test liquid before and after the mixing with a liquid can be measured continuously. Therefore, the present invention is effective particularly where a transitional turbidity change involving a reaction is to be observed and where a difference in the turbidity of the test liquid before the mixing with the liquid is to be compensated for. Further, since the present invention is capable of simplifying the procedure as well as of reducing the possibility of occurrence of a malfunction, the present invention has very important practical effects and allows measurement and examination to be achieved more efficiently with reduced labor.

### Example 3

Example 3 of the present invention will be described in detail with reference to Figs. 1 and 2 showing the same apparatus as used in Example 1. This Example also used a dispersion containing polystyrene particles having an average diameter of 20 nm dispersed homogenously in pure water as a test liquid to be retained in the sample cell. 0.25 ml of the test liquid containing the aforementioned polystyrene particles was introduced into the sample cell 1.

Then, the computer 7 was operated to start recording the output signal of the photosensor 5, while the sample cell 1 being irradiated with substantially parallel light 4. Pure water was injected from a point of time after lapse of 10 seconds as in Examples 1 and 2, and a variation in the output signal of the photosensor 5 was observed to check whether sufficient stirring could be achieved to make the mixed liquid homogeneous enough.

As to the judgment of the degree of stirring, stirring was judged to be sufficient when: the output signal of the photosensor 5 corresponded to the degree of turbidity lowered by the diluting effect due to the injection of pure water; the output signal became constant within an observation period; and these were reproduced stably.

In making the judgment, combinations of ratio R and injection time T shown in Table 1 were established so that each combination satisfied the relation of T≦10×R.

**Table 1**

| | | | | | | |
|---|---|---|---|---|---|---|
| R | 0.1 | 0.1 | 0.12 | 0.4 | 0.5 | 0.5 |
| T(sec) | 0.5 | 1 | 1.2 | 4(j) | 4 | 5 |
| Degree of Stirring | × | × | ● | ● | × | × |

### Example 4

Next, description will be made of the case where the size of the injection port 2 shown in Figs. 1 and 2 was varied, specifically, where the diameter of the injection port was 0.2 cm. In this Example also, the degree of stirring was judged in the same manner as in Example 3. In making the judgment, combinations of ratio R and injection time T shown in Table 2 were established so that each combination satisfied T≦10×R.

**Table 2**

| | | | | | | |
|---|---|---|---|---|---|---|
| R | 0.4 | 0.4 | 0.48 | 1.6 | 1.8 | 1.8 |
| T(sec) | 2 | 4 | 4.8 | 16 | 16 | 18 |
| Degree of Stirring | × | × | ● | ● | × | × |

### Example 5

Next, description will be made of the case where the size of the injection port 2 shown in Figs. 1 and 2 was varied, specifically, where the diameter of the injection port was 0.05 cm. In this Example also, the degree of stirring was judged in the same manner as in Example 3. In making the judgment, combinations of ratio R and injection time T shown in Table 3 were established so that each combination satisfied the relation: T≦10×R.

**Table 3**

| | | | | | | |
|---|---|---|---|---|---|---|
| R | 0.02 | 0.02 | 0.03 | 0.1 | 0.12 | 0.12 |
| T(sec) | 0.1 | 0.2 | 0.3 | 1 | 1 | 1.2 |
| Degree of Stirring | × | × | ● | ● | × | × |

In Tables 1, 2 and 3, the symbol "●" represents the case where sufficient stirring could be achieved, and the symbol "×" represents the case where sufficient stirring could not be achieved. The cases represented by "×" include not only the case where the output signal of the photosensor 5 did not reach such a magnitude as to indicate that sufficient stirring was achieved like the cases d, f, h and k shown in Fig. 11, but also the case where the output signal did not become stabilized within a predetermined period of time.

As can be seen from the results shown in Tables 1, 2 and 3, there was a case represented by "×" where sufficient stirring could not be achieved even if T≦10×R was satisfied. With attention focused on R, preferable conditions in accordance with the present invention are summarized below.

Regarding Table 1, sufficient stirring was achieved when 0.12≦R≦0.4 was satisfied. Regarding Table 2, sufficient stirring was achieved when 0.48≦R≦1.6 was satisfied. Regarding Table 3, sufficient stirring was achieved when 0.03 ≦R≦0.1 was satisfied. It should be noted that in the case where the volume ratio R of the liquid to be injected is constant, sufficient stirring can be achieved to make the mixed liquid homogeneous if the injection time T is not more than a predetermined value, that is, if T≦10×R (formula (1)) is satisfied. It is therefore needless to say that sufficient stirring can be achieved if each range of R and the formula (1) are satisfied at the same time.

Since differences in condition among Tables 1, 2 and 3 reflect differences in the diameter of the injection port, the preferable conditions in accordance with the present invention can be generalized as follows.

Assume that the open area of the injection port is S. If the diameter of the injection port is 0.1 cm then S is about 0.00785 cm². If the diameter of the injection port is 0.2 cm then S is about 0.00314 cm². If the diameter of the injection port is 0.05 cm then S is about 0.00196 cm².

Subsequently, V/S found from the volume V of the liquid to be injected (reagent liquid) and the open area S of the injection port is defined as C. As can be understood from Fig. 1, on the assumption that the liquid injected from the injection port advances in a band-like state (without diffusion), C is equal to the length of the band-shaped liquid (flux length).

If C is expressed with R then C is R·V₀/S. If R is expressed with R by substitution of V₀=0.25 ml into that expression, the values of R are: about 0.031×C when the diameter of the injection port is 0.1 cm; about 0.13×C when the diameter of the injection port is 0.2 cm; and about 0.0078 ×C when the diameter of the injection port is 0.05 cm.

Here, calculation is made to find ranges of C from the aforementioned respective ranges of R. The ranges of C thus found are: 3.9≦C≦13 when the diameter of the injection port is 0.1 cm; 3.7≦C≦12 when the diameter of the injection port is 0.2 cm; and 3.8≦C≦13 when the diameter of the injection port is 0.05 cm. Sufficient stirring can be achieved when each of these ranges is satisfied. A range satisfying all these three ranges is 3.9≦C≦12.

As can be understood from the foregoing, sufficient stirring can be achieved when the flux length C is within the range from 3.9 to 12 cm and, at the same time, the formula (1) is satisfied.

### Example 6

For further generalizing the flux length condition, the stirring effect was verified in the same manner as described above by conducting experiments similar to those conducted in respective Examples 1, 2 and 5 with use of sample cells which were different in distances A and B. The results of the experiments are shown in Table 4.

In this case, the distance of a portion where a plane parallel with a horizontal plane including the direction of injection of the liquid intersects the inner wall of each sample cell, that is, the inner circumferential distance D of the sides of the liquid retaining portion of each sample cell was measured. For example, when A was 0.8 cm and B was 0.4 cm, D was 2.4 cm (=2×(0.8+0.4)). The lower limit of C is represented by L, and the upper limit of C represented by H.

**Table 4**

| | | | |
|---|---|---|---|
| A | 8 | 8 | 4 |
| B | 4 | 8 | 4 |
| C | 2.4 | 3.2 | 1.6 |
| L (lower limit of C) | 3.9 | 5.2 | 2.5 |
| H (upper limit of C) | 12 | 16 | 8.2 |

### Example 7

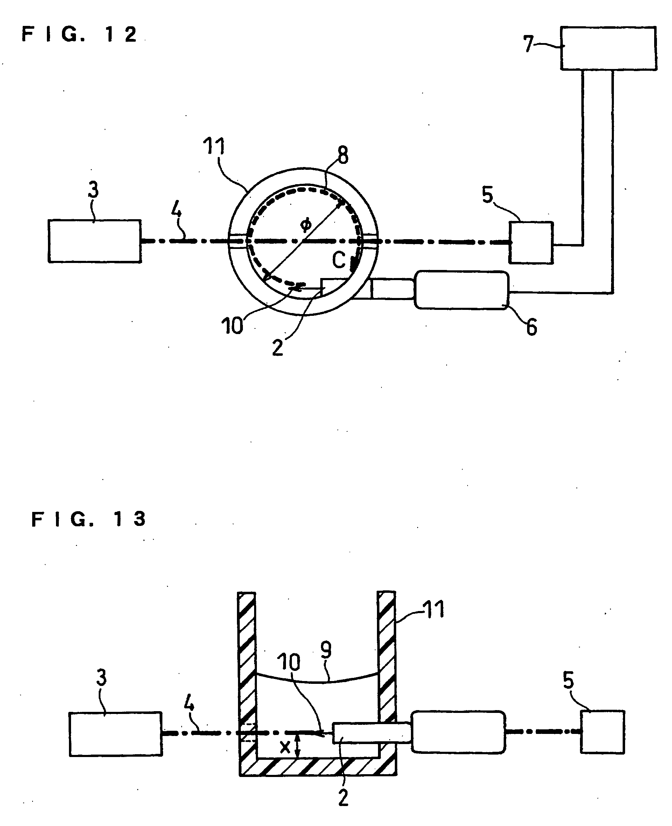

The stirring effect was verified by conducting experiments similar to those conducted in the above-described Examples with use of a solution concentration measuring apparatus shown in Figs. 12 and 13. Fig. 12 is a schematic top plan view of the solution concentration measuring apparatus including another sample cell in accordance with the present invention. Fig. 13 is a schematic vertical sectional view of the solution concentration measuring apparatus including the sample cell shown in Fig. 12.

The components denoted by respective reference numerals 2 to 10 in Figs. 12 and 13 correspond to those denoted by reference numerals 2 to 10 in Figs. 1 and 2 and have the same functions respectively. The sample cell 11 shown in Figs. 12 and 13 is made of glass and is shaped cylindrical. The internal diameter of the sample cell 11 is represented by φ in Fig. 12. As shown in Fig. 12, the injection port 2 was positioned so that the direction of injection of a liquid to be injected became parallel with an inner wall surface and a horizontal plane at a point where the injection port 2 is in contact with the inner wall surface of the liquid retaining portion of the sample cell 11. That is, the direction of injection was parallel with the horizontal plane and parallel with the line tangent to the internal circumference of the liquid retaining portion at the aforementioned point. The internal circumferential distance D of the sample cell 11 was calculated in the same manner as described above. The results of the experiments are shown in Table 5.

**Table 5**

| | | | |
|---|---|---|---|
| φ | 0.9 | 1.0 | 1.1 |
| D | 2.8 | 3.1 | 3.5 |
| L (lower limit of C) | 4.5 | 5.0 | 5.5 |
| H (upper limit of C) | 14 | 16 | 18 |

The conditions satisfying all the conditions shown in Tables 4 and 5 are L≧1.7×D and H≦5×D. These conditions can be formulated into the formula (2):

M×D≦C≦N×D (2)

wherein M is 1.7 and N is 5.

Thus, when at least the formulae (1) and (2) are satisfied, the resulting mixed liquid can be stirred until it becomes homogeneous enough. The formula (2) indicates that sufficient stirring can be realized if the flux length C is within the range from 1.7 to 5 times as large as the internal circumferential distance D of the sample cell used.

The results thus obtained mean that the stirring effect is greatly influenced not only by the volume and the injection rate (the volume to be injected per unit time) of the liquid to be injected but also by the relation between the internal circumferential distance D and the length C of a flux to be produced. Accordingly, a sufficient stirring effect can be brought about if D and C are established so as to have a predetermined relation therebetween. Particularly, since there is a suitable range of the ratio between the internal circumferential distance D and the flux length C, establishing D and C so as to satisfy the formula (2) is reasonable. Further, it can be confirmed from the results of the above-described experiments that sufficient stirring can be achieved if at least M and N are 1.7 and 5, respectively.

As described above, in accordance with this Example, a solution can be stirred without using a stirring rod and without removing the sample cell from the optical system. Thus, the turbidities of a test liquid before and after the mixing with a liquid can be measured continuously. Therefore, the present invention is effective particularly where a transitional turbidity change involving a reaction is to be observed and where a difference in the turbidity of the test liquid before the mixing with the liquid is to be compensated for. Further, since the present invention is capable of simplifying the procedure as well as of reducing the possibility of occurrence of a malfunction, the present invention has very important practical effects and allows measurement and examination to be achieved more efficiently with reduced labor.

While the stirring effect was judged based on the stability of the output signal of the photosensor 5 at a point of time after lapse of 50 seconds from the liquid injection in Examples 1 to 7, the stirring method of the present invention is not limited thereto.

When any reaction does not follow the injection of pure water into a dispersion of polystyrene particles as in these Examples, the output signal of the photosensor 5 need be observed for such a period of time as to allow homogenization due to diffusion and homogenization due to stirring to be distinguished from each other. In the case of these Examples, stirring is not completed if the elapsed time after the liquid injection is too short. Too long an elapsed time is not suitable for the judgment on the stirring effect because there may be a case where homogenization is completed by diffusion undesirably or where precipitation or separation of particulate components makes the mixed liquid heterogeneous even if the mixed liquid has been homogenized once.

When any reaction takes place due to the injection of a reagent liquid, the stirring effect can be judged based on the stability of the output signal of the photosensor 5 generated after the reaction has been completed. Even if the reaction is not completed, compensation for a change in turbidity due to the reaction, if possible, allows the stirring effect to be judged from the output signal of the photosensor 5.

In the above-described Examples, the injection port 2 was positioned lower than the liquid level of the test liquid in the state before the injection of the reagent liquid and, hence, the reagent liquid to be injected could be injected directly into the test liquid without contacting the atmosphere, resulting in a sufficient stirring effect. Since such an arrangement was made that the axis of injection extending from the center of the section of the injection port 2 into the retained test liquid toward the injection direction 10 and the optical axis of substantially parallel light 4 had a point of intersection in the liquid retaining portion of the sample cell, there was a lowered probability that bubbles and the like adhere to the optical window to interfere with the optical path of substantially parallel light 4.

Further, when the injection port 2 was positioned so that the direction of injection caused the resulting mixed liquid to generate a single whirlpool, and when the injection port 2 was positioned so that the direction of injection was perpendicular to an inner wall surface of the sample cell, the operation of the whole apparatus was stabilized.

When the sample cell used had a rectangular parallelepiped shape, the injection port 2 was located at one side of the sample cell, and one end of the injection port 2 was positioned so as to be in contact with a side perpendicular to the former side, the operation was stabilized.

With an arrangement wherein the injection port 2 was positioned in the sample cell of a cylindrical shape so that the direction of injection was parallel with an inner wall of the sample cell at a point, at which the injection port 2 adjoined to the inner wall, the operation was stabilized.

Additionally, with an arrangement wherein the injection port 2 was positioned so that the direction of injection was parallel with the liquid level, the operation was stabilized.

### Example 8

In this Example, the concentration of a protein in a test liquid is measured using the apparatus shown in Figs. 1 and 2 and a sulfosalicylic acid reagent liquid (a reagent prepared by dissolving sodium sulfate in an aqueous solution of 2-hydroxy-5-sulfobenzoic acid) as a reagent liquid.

In this Example, since the protein component in the test liquid aggregates to make the whole test liquid turbid when the test liquid is mixed with the sulfosalicylic acid reagent liquid, the degree of turbidness, i.e., turbidity is measured to determine the protein concentration.

Here, the turbidity is measured in terms of the intensity of transmitted light, that is, in terms of the output signal of the photosensor 5. With increasing protein concentration, the turbidity increases and, hence, the output signal of the photosensor 5 decreases. In this Example, unlike Examples 1 to 7, the turbidity producing speed, that is, the rate of change of the output signal of the photosensor 5 is influenced not only by the stirring effect but also by the rate of reaction (aggregation). Note that in this Example the diameter of the injection port 2 is 0.1 cm and the distances A and B are 0.8 cm and 0.4 cm, respectively.

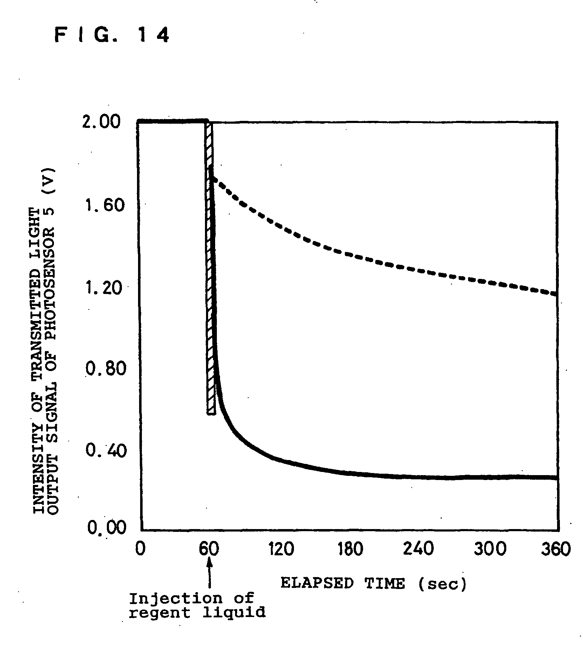

First, human albumin as a major protein contained in urine was dissolved in a urine, which had been confirmed to have a protein concentration of 0.03 mg/dl or less, to prepare a test liquid having an albumin concentration of 100 mg/dl. 0.25 ml of this test liquid was introduced into sample cell 1. Then, the computer 7 was caused to start recording the output signal of the photosensor 5, while the sample cell 1 being irradiated with substantially parallel light 4. A change with time in the output signal of the photosensor 5 is shown in Fig. 14. In Fig. 14, the abscissa represents the elapsed time, and the ordinate represents the output signal of the photosensor 5.

At a point of time 60 seconds after the starting of recording, the computer 7 controlled the pump 6 to inject 0.05 ml of the sulfosalicylic acid reagent liquid from the injection port 2 in 2 seconds. The solid line in Fig. 14 shows the output signal of the photosensor 5 in the case of the injection of the sulfosalicylic acid reagent liquid.

In measuring the concentration of a specific component in the test liquid, the output signal of the photosensor 5 generated after the mixing with the reagent liquid, which is shown by that solid line, was analyzed to calculate the concentration of the test liquid. As shown by the solid line in Fig. 14, the intensity of transmitted light varied largely around the time of the injection of the reagent liquid. This was because a flux of the injected reagent liquid directly invaded the optical path of substantially parallel light 7 to interfere with the optical path. The hatched region represents a region in which the intensity of transmitted light varied largely.

The dotted line in Fig. 14 shows the output signal of the photosensor 5 generated in the case of the injection of 0.05 ml of the sulfosalicylic acid reagent liquid in 5 seconds. Though this dotted line overlapped the solid line until 60 seconds elapsed from the starting of the measurement, the rate of drop of the output signal of the photosensor 5 generated thereafter was lower than the solid line. This was because any stirring effect did not resulted. The output signal of the photosensor 5 showed about 1.14 V at a point of time 360 seconds after the mixing with the reagent liquid as shown in Fig. 14. Thereafter, the output signal continued lowering and did not become stabilized.

In the case of the injection in 2 seconds, on the other hand, the output signal of the photosensor 5 showed about 0.25 V at a point of time 360 seconds after the mixing with the reagent liquid as shown by the solid line and became sufficiently stabilized due to the saturation of the lowering of the signal. Even in a case where a test liquid having an albumin concentration of 100 mg/dl was sufficiently stirred with a stirring rod or the like, the output signal of the photosensor 5 became stabilized at about 0.25 V.

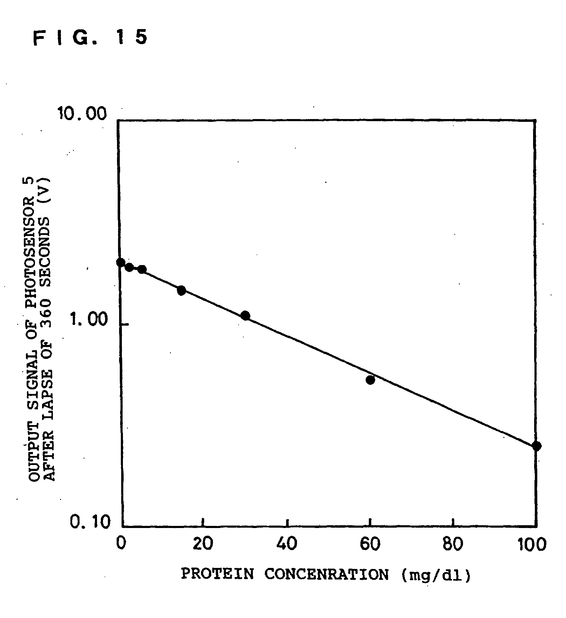

Measurement was conducted in a manner similar to that described above with the albumin concentration of the test liquid being varied from 100 mg/dl to 0 mg/dl, 2.5 mg/dl, 5 mg/dl. 15 mg/dl, 30 mg/dl or 60 mg/dl and with injection of sulfosalicylic acid reagent liquid being performed in 2 seconds. Fig. 15 shows the relation between the protein concentration and the intensity of transmitted light measured at a point of time 360 seconds after the mixing. In this figure the ordinate represents the output signal of the photosensor 5 generated at a point of time 360 seconds after the mixing with the reagent liquid, and the abscissa represents the protein concentration of the test liquid.

As shown by the solid line in Fig. 15, points were aligned on a straight line, and with this straight line used as a calibration curve, it was possible to measure the protein concentration with a high precision. This precision of measurement was similar to that obtained when sufficient stirring was achieved using a stirring rod or the like.

On the other hand, where the sulfosalicylic acid reagent liquid was injected in a longer time than 2 seconds, for example 3, 4 or 5 seconds, points were not aligned on a straight line with lowered reproducibility and the precision of measurement was low.

As described above, this Example could obtain a stirring effect similar to that obtained when sufficient stirring was made using a stirring rod or the like by injecting the reagent liquid to cause stirring under the conditions satisfying the formula (1) and (2), thus realizing high-precision measurement.

While transmitted light was detected with the photosensor 5 to measure the turbidity in the foregoing Examples, measurement with a similar degree of precision could be realized even though scattered light resulting from the propagation of substantially parallel light 4 in a solution was detected to measure the turbidity. It is to be noted that the injection rate during the period of time for the injection of a liquid was set constant.

### Industrial Applicability

The solution concentration measuring method in accordance with the present invention is capable of mixing a solution and a reagent liquid with stirring without using a stirring rod or the like, has a great practical effect and allows measurement and examination to be achieved more efficiently with reduced labor. Further, the method allows continuous observation of the reaction between a specific component of a test liquid and the reagent liquid and hence has a very high practical effect from this point of view. The solution concentration measuring method in accordance with the present invention is suitable particularly for urine examination.

## Claims

1. A solution concentration measuring method for measuring concentration of a specific component in a test liquid by measuring optical characteristics of a mixed liquid obtained by mixing said test liquid and a reagent liquid, said method comprising the steps of:
(a) injecting a reagent liquid into a test liquid with stirring caused by the injection to obtain a mixed liquid comprising said test liquid and said reagent liquid; and
(b) measuring at least a first optical characteristic of said test liquid before the injection of said reagent liquid and a second optical characteristic of said test liquid after the injection of said reagent liquid while irradiating said test liquid with light, to measure the concentration of said specific component in said test liquid on the basis of said first optical characteristic and said second optical characteristic.

2. The solution concentration measuring method in accordance with claim 1, wherein said first optical characteristic and said second optical characteristic are measured continuously at the step (2).

3. The solution concentration measuring method in accordance with claim 1, wherein a volume V₀ of said test liquid, a volume V of said reagent liquid and time period T during which said reagent liquid is injected are set to have a predetermined relation.

4. The solution concentration measuring method in accordance with claim 3, wherein said relation satisfies the formula (1):
T≤K×(V/V₀) (1)
where K is a constant.

5. The solution concentration measuring method in accordance with claim 4, wherein K is not greater than 10.

6. A sample cell comprising:
a liquid retaining portion capable of retaining a liquid and of measuring optical characteristics of said liquid while irradiating said liquid with light; and
an injection port for injecting a second liquid into a first liquid previously retained in said liquid retaining portion with stirring caused by the injection of said second liquid into said first liquid to obtain a mixed liquid comprising said first liquid and said second liquid.

7. The sample cell in accordance with claim 6, wherein said injection port is positioned lower than a liquid level of said previously retained first liquid such that said second liquid is injected into said first liquid without said second liquid contacting outside air.

8. The sample cell in accordance with clam 6, wherein a direction of the injection of said second liquid from said injection port and an optical axis of the light intersect each other in said liquid retaining portion.

9. The sample cell in accordance with clam 6, which is capable of injecting said second liquid so as to cause said first liquid to generate a single whirlpool.

10. The sample cell in accordance with clam 6, wherein a direction of the injection of said second liquid from said injection port is perpendicular to one inner wall surface of said liquid retaining portion.

11. The sample cell in accordance with clam 6, wherein said liquid retaining portion has a rectangular parallelepiped shape; said injection port is positioned at one side of said liquid retaining portion, and one end of said injection port is in contact with a side perpendicular to the former one side.

12. The sample cell in accordance with clam 6, wherein said liquid retaining portion has a bottomed cylindrical shape, and a direction of the injection of said second liquid from the injection port is parallel with an inner wall of the liquid retaining portion at a point where said injection port is in contact with said inner wall.

13. The sample cell in accordance with clam 6, wherein a direction of the injection of said second liquid from said injection port is parallel with a liquid level of said previously retained first liquid.

14. The sample cell in accordance with clam 6, wherein an internal circumferential distance D of said liquid retaining portion, an open area S of said injection port and a volume V of said second liquid satisfy a predetermined relation.

15. The sample cell in accordance with clam 14, wherein said relation satisfies the formula (2):
M×D≦V/S≦N×D (2)
where M and N are each independently a constant.

16. The sample cell in accordance with clam 15, wherein M is 1.7 and N is 5.

17. A solution concentration measuring apparatus comprising a sample cell, said sample cell comprising:
a liquid retaining portion capable of retaining a liquid and of measuring optical characteristics of said liquid while irradiating said liquid with light; and
an injection port for injecting a second liquid into a first liquid previously retained in said liquid retaining portion with stirring caused by injection of said second liquid into said first liquid to obtain a mixed liquid comprising said first liquid and said second liquid.
